Europäisches Patentamt

European Patent Office

Office européen des brevets

(19)

(11) Veröffentlichungsnummer: **0 507 010 A1**

## (12) EUROPÄISCHE PATENTANMELDUNG

(21) Anmeldenummer: **91200776.2**

(22) Anmeldetag: **03.04.91**

(51) Int. Cl.⁵: **B60P 7/13**

(43) Veröffentlichungstag der Anmeldung:
**07.10.92 Patentblatt 92/41**

(84) Benannte Vertragsstaaten:
**AT BE CH DE DK ES FR GB GR IT LI LU NL SE**

(71) Anmelder: **Kosanovic, Milorad**
**Scheepstimmerlaan 3**
**NL-3016 AC Rotterdam(NL)**
Anmelder: **Floros, G.**
**van Vollenhovenstraat 56**
**NL-3016 BK Rotterdam(NL)**

(72) Erfinder: **Kosanovic, Milorad**
**Scheepstimmerlaan 3**
**NL-3016 AC Rotterdam(NL)**

(74) Vertreter: **Ferguson, Alexander et al**
**Octrooibureau Vriesendorp & Gaade, P.O.**
**Box 266**
**NL-2501 AW The Hague(NL)**

(54) **Vorrichtung zum Festlegen von Container.**

(57) Eine Vorrichtung (1) zum Festlegen von versetzbaren Container die mit Sperrlöchern (50) versehenen Aufstellungsorganen, wie zum Beispiel sogenannte "corner fittings", versehen ist, wobei die Vorrichtung Stützmittel (25, 26) zur Unterstützung der Vorrichtung selbst auf einer Unterlage sowie Festlegorgane (2, 3) enthält, die in Hinsicht auf die Stützmittel um eine Achse (A-A) verdrehbar sind zwischen einer ersten Lage, in der zumindest ein Teil der Festlegorgane durch das Sperrloch (50) des Aufstellungsorgans hingeführt werden kann, und einer zweiten Lage, in der der genannte Teil des Festlegorgans dem betreffenden Sperrloch hintergreift um also das betreffende Aufstellungsorgan festzulegen, und Nockenorgane (13, 14) zur Bewirkung, in Zusammenarbeit mit den Randbereichen des Sperrlochs, einer Versetzung des Festlegorganes zwischen der ersten und der zweiten Lage. Die Festlegorgane enthälten zwei Festlegteile (2, 3) die in Hinsicht auf einander gegenseitig um eine Achse verdrehbar sind, welche Achse in einer Fläche liegt, die im wesentlichen parallel mit der Fläche des betreffenden Sperrlochs liegt, und die Festlegteile sind versehen mit Oberkopfteile (11, 12), die gebildet sind um in der zweiten Lage gegenüberliegende Randbereiche des betreffenden Sperrlochs hinterzugreifen.

FIG. 1

EP 0 507 010 A1

Die Erfindung betrifft eine Vorrichtung zum Festlegen von Container die mit mit Sperrlöchern versehenen Aufstellungsorganen versehen sind, insbesonders mit sogenannten "corner fittings" oder "corner castings" ausgerüsteten Container.

Derartige Vorrichtungen sind weit und breit bekannt in der Form von sogenannten "twist lock" Vorrichtungen, die eine Basis und einen um eine vertikale Achse in Hinsicht auf die Basis verdrehbaren Sperrkopf aufweisen. Der Sperrkopf ist unrund und kann in einer ersten Lage, in der dieser Sperrkopf in oder aus ein unrundes Zugangsloch der "corner fitting" geführt werden kann, festgesetzt werden, und, nach Verdrehung des Sperrkopfs, in einer zweiten Lage, in der dieser Sperrkopf nicht mehr das Zugangsloch hindurchgeführt werden kann, um also vertikale und horizontale Versetzung der "corner fitting" und damit auch der Container zu verhindern, festgesetzt werden. Eine derartige Weise von Festlegen von Container ist u.a. üblich beim Stauen von Containerschiffen. Es gibt hierbei den Nachteil, dass um der Sperrkopf von der ersten Lage zu der zweiten Lage zu drehen und vice versa einen menschlichen Eingriff erfordert ist, was in der Regel mit Hilfe vom einen special entwickelt Gerät gescheht. Hierdurch muss das Personal aber länger als in Bezug auf die Sicherheit ratsam sein wurde, in der Nähe des zu stauenden Containers im Laderaum des betreffenden Schiffs sein. Ausserdem verlangen diese Verrichtungen extra Zeit.

Weiterhin sind ein Paar Ausführungen einer "twist lock" Vorrichtung bekannt, die in der amerikanischen Patentschrift 4.626.155 beschrieben worden sind. Die erste Ausführung enthält eine Basisplatte und einen durch eine Feder in Richtung der zweiten, sperrenden Lage gespannenen unrunden Sperrkopf. Der Sperrkopf ist sowie an der Oberseite als an der Unterseite derart gebildet, dass wenn die Ränder eines unrunden Lochs einer "corner fitting" gegen diese betreffende Seite drücken, der Sperrkopf um eine vertikale Achse zur ersten Lage gedreht wird um zu ermöglichen dass der Sperrkopf in oder aus der "corner fitting" gebracht werden kann. Der Sperrkopf kehrt unter die Federwirkung automatisch nach der zweiten, sperrenden Lage zurück. Die Basisplatte soll geschweisst oder sonstwie an einer Unterlage wie einen Schiffsraumboden oder einen Aufleger befestigt werden. Die zweite Ausführung die für das an einander kuppeln von zwei Container geeignet ist, enthält statt die Basisplatte einen konventionellen unrunden, mit der Hand zu bedienen zweiten Sperrkopf. Beide Ausführungen sind mit den Handbedienungssperrmitteln versehen, womit die zweite Lage des besonder gebildeten Sperrkopfs gesichert werden kann. Diese bekannten "twist lock" Vorrichtungen sind ziemlich komplex und dadurch möglich ziemlich Störungsfähig.

Ein Hauptziel der Erfindung ist eine Vorrichtung des in dem Oberbegriff erwähnten Typs zu verschaffen, die auch mit Mitteln versehen ist um die Containerfestlegorgane, die gewissermassen übereinstimmen mit den obenerwähnten Sperrkopfen, auf eine durch die Ränder eines Sperrlochs einer "corner fitting" oder "corner casting" bediente Weise automatisch verdrehen zu lassen zwischen der ersten, nicht festlegenden Lage zu der zweiten, festlegenden Lage, aber trotzdem einfach ausgeführt worden ist. Andere Ziele in Bezug auf die Verschaffung einer verbesserten Vorrichtung werden für einen Sachverständigen beim Lesen der Beschreibung deutlich werden.

Die Erfindung verschafft eine Vorrichtung zum Festlegen von versetzbaren Container, die mit mit Sperrlöchern versehenen Aufstellungsorganen versehen ist, wie z.B. sogenannte "corner fittings", wobei die Vorrichtung Stützorgane zur Unterstützung der Vorrichtung selbst auf einer Unterlage sowie Festlegorgane enthält, die in Hinsicht auf die Stützorgane um eine Achse verdrehbar sind zwischen einer ersten Lage, in der zumindest ein Teil der Festlegorgane durch das Sperrloch des Aufstellungsorgans hindurchgeführt werden kann, und einer zweiten Lage, in der der erwähnte Teil der Festlegorgane dem betreffenden Sperrloch hintergreift um also das betreffende Aufstellungsorgan festzulegen, und Nockenorgane zur Bewirkung, in Zusammenarbeit mit den Randbereichen des Sperrlochs, einer Versetzung der Festlegorganes zwischen der ersten und der zweiten Lage, dadurch gekennzeichnet, dass die Festlegorgane zwei Festlegteile enthälten, die in Hinsicht auf einander gegenseitig um eine Achse verdrehbar sind, welche Achse in einer Fläche liegt die im wesentlichen parallel mit der Fläche des betreffenden Sperrlochs liegt, und dass die Festlegteile bzw. mit Oberkopfteilen versehen sind, die gebildet sind um in der zweiten Lage gegenüberliegenden Randbereiche des betreffenden Sperrlochs hinterzugreifen.

Die Vorrichtung nach der Erfindung hat als ein wichtiges Kennzeichen, dass sie statt einen um eine vertikale Achse verdrehbaren Sperrkopf, zwei in gegenseitiger Richtung, um eine hauptsächlich quer auf die Aufstellungsrichtung des Containers stehenden Achse verdrehbaren Festlegteile aufweist, wobei die Aufstellungsrichtung der Container und die Verdrehrichtung der Festlegteile in einer Fläche liegen, was eine fliessende Funktionierung der Einrichtung ermöglicht.

Gemäss einer Vorzugsausführung der Vorrichtung nach der Erfindung sind Spannorgane versehen zum Spannen der Festlegteile in Richtung der ersten Lage, wobei die Nockenorgane als bzw. auf den Festlegteilen versehene Schulterorgane ausgeführt sind, die gebildet sind um in Zusammenwirkung mit gegenüberliegenden Randbereichen des betreffenden Sperrlochs die Festlegteile von der ersten zur zweiten Lage zu bringen. Also, bei der Aufstellung dieses Containers braucht dieser Container keine Kraft auf die Vorrichtung auszuüben um die Festlegteile zu der ersten Lage zu bringen, aber wird die Vorrichtung gebrauchsfertig angeboten. Die Schulterorgane werden dabei, wenn der Container auf der Vorrichtung niedergesetzt wird, durch den eigenen Gewicht des Containers niedergedrukt um die Oberkopfteile zu verdrehen um dem Sperrlochrand hinterzugreifen.

Bemerkt wird, dass bei diesen Ausführungen an erster Stelle steht um der Container gegen Verschiebung der Unterlage entlang festzulegen. Wenn es gewünscht ist um den Container gegen kippen festzulegen, wird es bevorzugt, dass der Oberkopfteil der Festlegteile und das Schulterorgan eine Empfangsöffnung bestimmen für einen passenden Empfang des Randes des betreffenden Sperrlochs darin. Wenn der Container und damit auch die "corner fitting" durch Ausseneinflüsse, z.B. das Rollen eines Schiffs, zu kippen neigt in Hinsicht auf die Unterlage, dann wird dies in weitgehenden Masse verhindert, indem der Rand des Sperrlochs sei es gegen relative Verdrehung nach zwei Seiten jeweils zwischen dem Oberkopfteil und dem Schulterorgan eingeklemmt wird. Hierdurch ist es beinahe nur noch möglich um die "corner fitting" auf senkrechte Weise auf die Vorrichtung zu setzen und von der Vorrichtung zu erwidern.

Gemäss einer weiteren Vorzugsausbildung der Vorrichtung nach der Erfindung enthält die Vorrichtung Befestigungsorgane die durch Unterkopfteile auf die Feslegteile gebildet werden, welche gebildet sind um nach Verdrehung in dieselber Richtung als der Oberkopfteil desselben Festlegteils in der zweiten Lage gegenüberliegenden Randbereichen eines in einer festen Unterlage oder in einem anderen Container angeordneten zweiten Sperrlochs hinterzugreifen. Durch die durch das eigene Gewicht des Containers, via die Randbereiche der Sperrlöcher, auf die betreffende Schulterorgane ausgeübte Kraft wird also eine aufwärtse, durch die Unterkopfteile auf den (die) Rand-(bereiche) des unterliegenden, in der festen Unterlage oder in einem anderen Container versehenen Sperrloch, ausgeübte Zurückhaltkraft verursacht. Hierdurch ist die Aufstellung des Containers in vergrössertem Masse gesichert. Beim Kippen des Containers und also des Sperrlochs wird weiterhin infolge der niederwärtsen Kraft, die auf eine Seite des Sperrlochs, auf das dort liegende Schulterorgan ausgeübt wird, der tatsächlich diametral gegenüberliegende Unterkopfteil fest gegen die Unterseite der Ränder des unterliegenden Sperrlochs gedrückt wird, womit Aufhebung der "corner fitting" verhindert wird.

Bei dieser Ausführung ist es weiter bevorzugt, dass die Schulterorgane je eine Auflegoberfläche aufweisen zur Unterstützung der Vorrichtung auf der Unterlage, wobei das Schulterorgan des einen Festlegteils und der Unterkopfteil des anderen Festlegteils eine zweite Empfangsöffnung bestimmen für einen passenden Empfang darin von dem Rand des zweiten Sperrlochs in der Unterlage.

Es wird auch bevorzugt, dass die Oberkopfteile der beiden Festlegteile gebildet sind um in der ersten Lage ein Profil zu bestimmen, das das betreffende Sperrloch hindurchgehen kann und/oder dass die Unterkopfteile gebildet sind um in der ertsten Lage ein Profil zu bestimmen, das das zweite Sperrloch in der Unterlage hindurchgehen kann.

Eine weitere Vorzugsausführung hat das Kennzeichen, dass die Vorrichtung Organe aufweist zum weiter Verhindern von durch Kippen verursachter Verdrehung des einen Festlegteils in Hinsicht auf den anderen Festlegteil und während Gewährung von übrigens, gleiche gegenseitige Verdrehung dieser Festlegteile in Hinsicht auf einander. Es wird bevorzugt, dass dafür auf je Schulterorgan der Festlegorgane weiteren Nockenorgane angeordnet sind, die unter Reibung und/oder Klemmung auf die Oberfläche des anderen Festlegteils bei solitairer Verdrehung dieses letztes angreifen.

Die Erfindung wird jetzt näher erläutert an Hand der in den Zeichnungen wiedergegebenen, nur in der Weise eines nicht beschränkenden Beispiel, verschafften Ausführung. Es wird gezeigt in:

Fig. 1 eine auseinander genommene, perspektivish Ansich der Vorrichtung nach der Erfindung;

fig. 2A eine Ansicht der Vorrichtung nach fig. 1, in einer Situation in der die Vorrichting in einem Sperrloch eines Schiffsladenraumbodens oder einer "corner fitting" eines unterliegenden Containers gesetzt ist, wobei ein Container gesetzt wird um festgelegt zu werden; und

fig. 2B die Situation wiedergibt folgend auf die von Fig. 2A, wenn der festzulegende Container völlig gesunken ist und durch die Vorrichtung nach der Erfindung festgelegt ist.

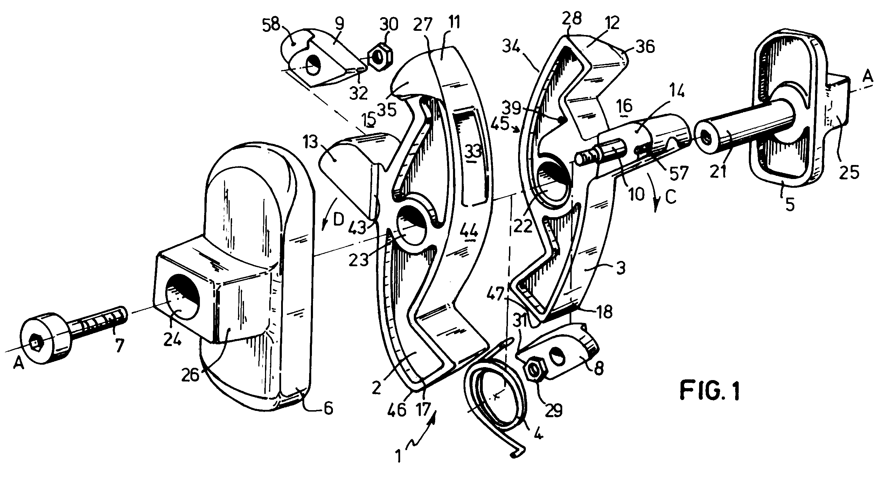

Die in Fig. 1, in auseinandergenommene Zustand wiedergegebene Festlegvorrichtung 1 enthält zwei Endplatten 5 und 6 mit zwei wesentlich s-förmigen Festlegteile 2 und 3 dazwischen. Die wesentlich S-förmigen Teile sind beide mit Schültern 13 und 14 versehen, wodurch die Form dieser beiden Festlegteile auch tatsächlich hauptsächlich s-förmig beschrieben werden könnte. Die Endplatte 5 ist an der Aussenseite mit einem herausragenden Auflegeteil 25 versehen, während die Endplatte 6 mit einem nach aussen herausragenden Auflegeteil 26 versehen ist. Die Endplatte 5 ist weiterhin an der Innenseite mit einer sich in der Richtung der Achse A-A erstreckenden hohlen Welle versehen, welche Welle mit einem Innengewinde versehen ist. Die Festlegteile 2 und 3 wie auch die Endplatte 6 sind mit durgehenden Bohrungen 22, 23 und 24 versehen, wodurch die Teile 2, 3 und 6 auf die hohle Welle 21 geschieben werden können. Nachdem können die Teile 2, 3 und 5 und 6 bei einander gehalten werden durch die Innensechskantschraube 7 in der hohlen Welle 21 zu schrauben.

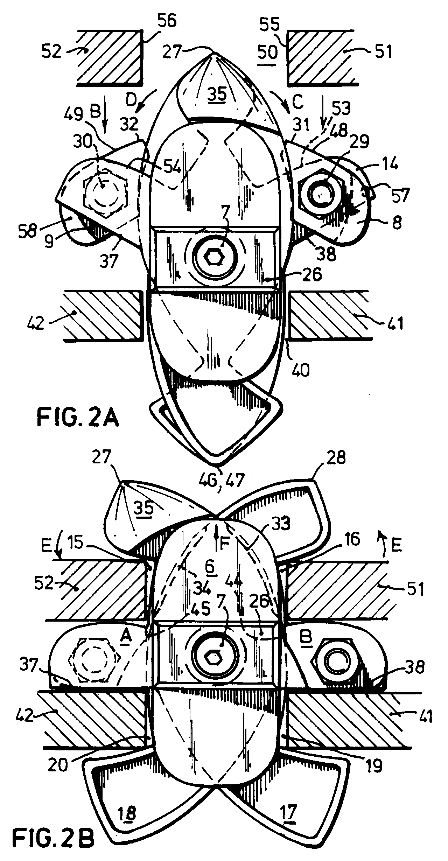

Die Festlegteile 2 und 3 sind an ihrer nach einander zugekehrten, axial gerichteten Oberfläche mit Löchern versehen (siehe Verweisnummer 39 was der Festlegteil 3 anbelangt), in der die umgebogenen Ende des Feders 4 gegen Verschieben in radialer und tangentialer Richtung festgehalten werden können. Die Aufnahmelöcher und die Feder 4 sind in solcher Weise in Hinsicht auf einander geliegen bzw. dimensioniert, dass in montierter Lage der Vorrichtung 1 die Feder 4 die beiden Festlegteile 2 und 3 gespannen hält in einer Lage in der ihre Linienförmigen Spitzenränder 27 und 28 mit einander wesentlich in einer Linie liegen, wie auch in Fig. 2A zu sehen ist. Leisten auf die Schulterorgane 13 und 14, wobei die Leiste 43 der Schulter 13 wiedergegeben ist, vermeiden dass die Festlegorgane 2 und 3 durch die Feder 4 weiter in Hinsicht auf einander verdreht werden würde. Die Schulter 43 kommt dabei gegen eine sich in axialer Richtung erstreckende Oberfläche (nicht wiedergegeben) der Endplatte 6. Bei dem Festlegteil 3 und der Endplatte 5 sind übereinstimmende Massnahmen getroffen werden.

In Fig. 1 ist weiterhin zu sehen, dass die Festlegteile 2 und 3 an ihrer Oberseite einen in der Fläche senkrecht auf die Achse A-A erstreckenden Kopf 11, 12 aufweisen, die an ihrer Oberseite durch die eher erwähnten Spitzenränder 27 und 28 begrenzt werden und an ihrer axialen Aussenenden Pilzkopfförmig in den Teilen 35 und 36 gebildet sind. Diese Pilzkopfförmigen Teile 35 und 36 ragen in axialer Richtung aus in Hinsicht auf den Rest der Festlegteile 35 und 36 um über die Oberränder der Endplatten 5 und 6 zu passen. Also bilden die Ausenoberfläche der Pilzförmigen Teile 35 und 36 zusammen mit den anschliessenden Oberflächen der Endplatten 5 und 6 flüssig gebildeten Treff- und Führungsoberfläche für die Ränder eines Sperrlochs einer "corner fitting" eines Containers. Die Kopfteile 11 und 12 sind auch in Richtungen quer auf die Achse A-A flüssig gebildet, wie einfach in Fig. 1 zu sehen ist. So, wie auch in Fig. 2A zu sehen ist, wird durch den oberen Teil der Vorrichtung 1 eine Hilfe verschafft beim Zentrieren der "corner fittings" in Hinsicht auf die Vorrichtung 1 beim Absenken eines Containers, wie auch eine Führung bei Fortsetzung des Absenken der Ränder des betreffenden Sperrlochs der "corner fitting" des Containers.

Die herausragenden Kopfteile 11 und 12 der Festlegteile 2 und 3 bilden bzw. mit den Oberflächen der Schülter 13 und 14 aussen ein wenig breiter werdende Einbuchtungen 15 und 16 zum Empfang der Ränder eines Sperrlochs einer "corner fitting" eines Containers, wie weiter an Hand der Figuren 2A und 2B erläutert wird.

Zum Schluss zeigt Fig. 1 noch Nocken 8 und 9, die jeder mit auf Zapfenden passenden Bohrungen versehen sind. Diese Zapfenden wovon eine mit 10 wiedergegeben ist, erstrecken sich ab die axial nach innen gerichteten Endfläche der Schülter 13 und 14 in axialer Richtung nach innen hin. Die Bohrungen der Nocken 8 und 9 haben eine Länge die ungefähr mit der Länge des Zapfendeteils 10, welche nicht mit Schraubgewinde versehen ist, übereinstimmt. Die beiden Nocken 8 und 9 sind jeder mit Angriffpunkten 31 und 32 versehen, die in montierter Zustand der Vorrichtung 1 gegen einer vertieften Oberfläche 33, 34 oder der darunter geliegenen Oberflächen 44 und 45 der Festlegteile 2 und 3 anliegen können. Hierauf wird nachfolgend eingegegangen.

In Fig. 2A ist die Vorrichting 1 in montierter Zustand wiedergegeben, und in einem in einem Ladenraumboden oder in einer "corner fitting" eines unterliegenden Containers angeordneten Loch 40 mit Ränder 41, 42 gesetzt. Derartige Sperrlöcher haben am meisten eine hauptsächliche ovale Form. In diesem Fall, ruhen die herausragenden Teile 25 und 26 der Endplatten 5 und 6 auf den kurzen Seiten (nicht wiedergegeben) des Sperrlochs 40. Es ist warzunehmen, dass die in radialer und tangentialer Richtung herausragenden Unterköpfe 17 und 18 in solcher Weise gebildet sind, dass sie in der Zustand der Vorrichtung 1, in der auch die Spitzenränder 27 und 28 mit einander in einer Linie liegen, mit ihren Rändern 46 und 47 in einer Linie liegen, und übrigens auch eine stromlinienförmige Form aufweisen die das Setzen der Vorrichtung 1 in das Loch 40 leichter macht. In der wiedergegebenen Empfangslage der Vorrichtung 1 ragen die beiden Schülter 13 und 14 schräg seitwärts nach oben aus. Die Einbuchtungen 15 und 16 sind hierbei von oben zugänglich. Weiterhin kan man sehen, dass durch die Krümmung in der Fläche senkrecht auf die Achse A-A, also die Fläche der Zeichnung, die Nocken 8 und 9 derart geliegen sind, dass sie mit ihren Punkten 31 und 32 auch seitwärts nach oben herausragen. Wenn nun ein Container, der mit sogenannten "corner fittings" oder "corner castings" versehen ist, gesetzt wird, wird das Sperrloch 50 mit Rändern 51, 52 oben der Vorrichtung 1 gebracht. Denn senkt man den Container ab in der Richtung der Pfeile B, bis die Unteroberfläche der Ränder 51 und 52 im Kontakt kommen mit Oberflächen 48 und 49 der Nocken 8 und 9. Durch die Momente, infolge Gewichtskräfte, die dann auf die Nocken ausgeübt werden, sind die Punkte 31 und 32 geneigt nach innen zu drehen, wobei sie gegen den gegenüberliegenden Oberflächen 33 und 34 des anderen Festlegteils eine Kraft ausüben, die diese Festlegteile weg von einander, nach aussen gegen die Federkraft in und um die Achse A-A verdrehen lässt. Die Krümmung der krümmen Oberfläche 33 und 34 ist in solcher Weise realisiert, dass die Oberfläche 33 und 34 nach innen schwenken durch die Verdrehung um Achse A-A, und also dass das nach unten schwenken der Punkte 31 und 32 ermöglichen. Zu einem bestimmten Zeitpunkt wird die Unteroberfläche der Ränder 51 und 52 gegen der Oberfläche 53, 54 der Schülter 13 und 14 ankommen, wodurch die Festlegteile weiter von einander verdreht werden. Während diese Entwicklungen kommen die Ränder 51, 52 in die Einbuchtungen 15 und 16 zu liegen.

Schliesslich wird die Zustand bereicht, wie in Fig. 2B wiedergegeben ist. Das eigene Gewicht des Containers druckt via die Ränder 51 und 52 der "cornerfitting" auf die flächen Oberflächen 53, 54 der Schülter 13 und 14 und sorgt damit für die Erhaltung der in Fig. 2B wiedergegebenen Rotationsposition der Festlegteile 2 und 3 in Hinsicht auf einander. Die Nocken 8 und 9 sind mitgedreht und befinden sich jetzt mit ihren Pukten 31 und 32 gegen Oberflächen 44 und 45 der Festlegteile 2 und 3. Die flachen Unterseiten 37 und 38 der Schülter 13 und 14 liegen stützend auf die Oberflächen der Ränder 41 und 42 des Lochs 40. Es ist deutlich zu sehen, dass die Ränder 51 und 52 des Sperrlochs 50 in die Einbuchtungen 15 und 16 bzw. bestimmt durch Kopfteil 11 und Schulter 13 des Festlegteils 2 und Kopfteil 12 und Schulter 14 des Festlegteils 3 aufgenommen sind. An der Unterseite sind die Ränder 41, 42 des Sperrlochs 40 auch in den Einbuchtungen 19 und 20 aufgenommen, die bzw. durch den Schulter 13 des Festlegteils 2 und Unterkopf 18 des Festlegteils 3 und Schulter 14 des Festlegteils 3 und Unterkopf 17 des Festlegteils 2, bestimmt werden. Dieses und jenes ist derart dimensioniert, dass die betreffenden Ränder 41, 42, 51, 52 in der in Fig. 2B wiedergegebenen Lage eng oder mit geringen Spielraum in den betreffenden Einbuchtungen 19, 20 und 15, 16 passen.

Es ist ohne weiteres deutlich, dass das Sperrloch 50 mit Ränder 51, 52 durch die Vorrichtung 1 gegen Versetzung in horizontaler Richtung in Hinsicht auf das Sperrloch 40 gesichert ist. Wenn jetzt ein kippend Moment ausgeübt wird auf die Ränder 51, 52, z.B in einer Richtung wie in Fig. 2B wiedergegeben mit Pfeile E, dann neigt Rand 51 den Kopfteil 12 des Festlegteils 3 aufwärts zu verdrehen und den Unterkopfteil 18 desselben Festlegteils nach unten wegdrehen zu lassen. Zu gleicher Zeit wird aber durch den Rand 52 eine abwärtse Druckkraft auf den Schulter 13 ausgeübt, womit auch der Unterkopfteil 17 gegen die Unterseite des Randes 41 angedrukt wird. Durch geringe Verdrehung (in Fall der obengenannte geringe Spielraum) des Randes 52 in der Einbuchtung 15, kommt dieser Rand rasch binnen den Begrenzungen dieser Einbuchtung 15 festzusitzen, womit weitere Kippung in der Richtung den Pfeil E verhindert wird. Das Kippen wird noch weiter verhindert duch die Nocken 8 und 9, die in der in Fig. 2B wiedergebenen Situation mit ihren Nocken 31 und 32 gegen den bzw. Oberflächen 44 und 45 der Festlegteile 2 und 3 anliegen. Durch die (geringfügige) Verdrehung von Rand 51 nach oben wird, wie eher angegeben worden ist, der Festlegteil 3, ebenfalls in geringem Masse, in die Richtung des Pfeils E mitrotiert. Die Folge davon ist, dass die Oberfläche 45 kräftig gegen den Punkt 32 angedruckt wird. Durch die Einsperrung des Nocks 9 zwischen den Rändern 52 und 42 bleibt der Nock 9 und damit der Punkt 32 auf seinem Platz und bewirkt dadurch mittels des Punktes 32 eine Klemmwirkung auf die Oberfläche 45 die weitere Verdrehung des Festlegteils 3 verhindert.

Wenn man wünscht den Container wieder zu erwidern braucht man nur bei der Vorrichtung nach der Erfindung dafür zu sorgen, dass ungefähr recht nach oben in der Richtung des Pfeils F an dem Container gezogen wird. Hierdurch wird etwa zu gleicher Zeit die auf die Schülter 13 und 14 ausgeübte Druckkraft aufgehoben und werden, unter die Wirkung des Feders 4, die Teile 11 und 12 wieder zu einander drehen, eventuell mit Hilfe der durch die durch die aufwärts bewogen Ränder 51, 52 auf die Teile 11 und 12 ausgeübten Kräfte, so dass die Ränder 51 und 52 einfach aus den Einbuchtungen 15 und 16 kommen und das Sperrloch völlig von der Vorrichtung 1 gelöst wird.

Die Schülter 13 und 14 sind auf ihrer axialen Innenfläche mit weiteren Spitzen 57, die mit Ausnehmungen 58 zusammenarbeiten, versehen, um zu verhindern dass die Nocke 8, 9 in der ersten Lage zu einer Lage kippen, in der die Punkte 31 und 32 nach aussen gerichtet sind.

**Patentansprüche**

1. Eine Vorrichtung (1) zum Festlegen von versetzbaren Container die mit Sperrlöchern (50) versehenen Aufstellungsorganen, wie zum Beispiel sogenannte "corner fittings", versehen ist, wobei die Vorrichtung Stützmittel (25, 26) zur Unterstützung der Vorrichtung selbst auf einer Unterlage sowie Festlegorgane (2, 3) enthält, die in Hinsicht auf die Stützmittel um eine Achse (A-A) verdrehbar sind zwischen einer ersten Lage, in der zumindest ein Teil der Festlegorgane durch das Sperrloch (50) des Aufstellungsorgans hingeführt werden kann, und einer zweiten Lage, in der der genannte Teil des Festlegorgans dem betreffenden Sperrloch hintergreift um also das betreffende Aufstellungsorgan festzulegen, und Nockenorgane (13, 14) zur Bewirkung, in Zusammenarbeitung mit den Randbereichen des Sperrlochs, einer Versetzung des Festlegorganes zwischen der ersten und der zweiten Lage. Die Festlegorgane enthälten zwei Festlegteile (2, 3) die in Hinsicht auf einander gegenseitig um eine Achse verdrehbar sind, welche Achse in einer Fläche liegt, die im wesentlichen parallel mit der Fläche des betreffenden Sperrlochs liegt, und die Festlegteile sind versehen mit Oberkopfteile (11, 12), die gebildet sind um in der zweiten Lage gegenüberliegende Randbereiche des betreffenden Sperrlochs hinterzugreifen.

2. Vorrichtung nach Anspruch 1, wobei Spannorgane (4) versehen sind zum Spannen der Festlegteile (2, 3) in Richtung der ersten Lage, wobei die Nockenorgane als bzw. auf der Festlegteilen (2, 3) versehenen Schulterorgane (13, 14) ausgeführt sind, welche Schulterorgane gebildet sind um, im Zusammenarbeitung mit gegenüberliegenden Randbereichen des betreffenden Sperrlochs, die Festlegteile von der ersten zur zweiten Lage zu bringen.

3. Vorrichtung nach Anspruch 2, **dadurch gekennzeichnet**, dass der Oberkopfteil (11, 12) und das Schulterorgan (13, 14) der Festlegteile (2, 3) eine Empfangsöffnung (15, 16) bestimmen für einen passenden Empfang des Randes des betreffenden Sperrlochs darin.

4. Vorrichtung nach Anspruch 3, **dadurch gekennzeichnet**, dass die Oberkopfteile (11, 12) der beiden Festlegteile (2, 3) gebildet sind um in der ersten Lage ein Profil zu bestimmen, das das betreffende Sperrloch hindurchgehen kann.

5. Vorrichtung nach einer der Ansprüche 1-4, **gekennzeichnet durch**, Befestigungsorgane die gebildet werden durch Unterkopfteile (17, 18) auf der Festlegteile (2, 3) die gebildet sind um, nach Verdrehung in dieselber Richtung als der Oberkopfteil desselben Festlegteils, in der zweiten Lage gegenüberliegenden Randbereiche eines in einer festen Unterlage oder in einem anderen Container angeordneten zweiten Sperrlochs hinterzugreifen.

6. Vorrichtung nach Anspruch 5, **dadurch gekennzeichnet**, dass die Unterkopfteile (17, 18) gebildet sind um in der ersten Lage ein Profil zu bestimmen, das das zweite Sperrloch hindurchgehen kann.

7. Vorrichtung nach Anspruch 5 oder 6, wenn abhängig von Anspruch 3 oder 4, **dadurch gekennzeichnet**, dass die Schulterorgane (13, 14) je eine Stutzoberfläche zur Unterstützung der Vorrichtung auf der Unterlage aufweist, wobei das Schulterorgan (13; 14) des einen Festlegteils (2; 3) und der Unterkopfteil (18; 17) des anderen Festlegteils (3; 2) eine zweite Empfangsöffnung (19; 20) bestimmen für einen passenden Empfang darin vom Rand des zweiten Sperrlochs in der Unterlage.

8. Vorrichtung nach einer der vorhergehenden Anspruche, **dadurch gekennzeichnet**, dass die Vorrichtung Organe (8, 9) aufweist zum weiter Verhindern von durch Kippen verursachter Verdrehung des einen Festlegteils (2; 3) in Hinsicht auf den anderen Festlegteil (3: 2) unter Gewährung von übrigens, gleiche gegenseitige Verdrehung dieser Festlegteile in Hinsicht auf einander.

9. Vorrichtung nach Anspruch 8, **dadurch gekennzeichnet**, dass auf je Schulterorgan der Festlegorgane (2; 3) zweiten Nockenorgane (8, 9) angeordnet sind, die unter Reubung und/oder Klemmung auf die Oberfläche (44; 45) des anderen Festlegteils (3; 2) bei solitairer Verdrehung dieses letztes angreifen.

FIG. 1

FIG. 2A

FIG. 2B

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-1756934 (PRESTEL)<br>* Figur 1 *<br>--- | 1-3 | B60P7/13 |
| Y | US-A-3399921 (TROST ET AL.)<br>* Figuren 1, 2 *<br>--- | 1-3 | |
| A | US-A-2108813 (FITCH)<br>* Figuren 4, 5 *<br>--- | 1 | |
| D,A | US-A-4626155 (HLINSKY ET AL.)<br>----- | | |

**RECHERCHIERTE SACHGEBIETE (Int. Cl.5)**

B60P

Der vorliegende Recherchenbericht wurde für alle Patentansprüche erstellt

| Recherchenort | Abschlußdatum der Recherche | Prüfer |
|---|---|---|
| BERLIN | 15 NOVEMBER 1991 | LUDWIG H.J. |

EPO FORM 1503 03.82 (P0403)